# EUROPEAN PATENT APPLICATION

(11) **EP 4 292 848 A1**
(43) Date of publication of application: **20.12.2023**
(21) Application number: 23161520.4
(22) Date of filing: 13.03.2023
(51) Int. Cl.: B60K 1/04

(54) **MIDDLE SECTION STRUCTURE OF CTB VEHICLE LOWER BODY AND VEHICLE**

(30) Priority: 17.06.2022 CN 202210689681
(71) Applicant: Chongqing Changan New Energy Vehicles Technology Co., Ltd, Chongqing 401133 (CN)
(72) Inventor: GUO, Wujun, Chongqing, 401133 (CN)
(74) Representative: 2K Patentanwälte Blasberg Kewitz & Reichel

(57) **Abstract**

The disclosure provides a middle section structure of a CTB vehicle lower body and a vehicle, includes a middle section body of the vehicle lower body, and the middle section body is integrally cast and formed. The middle section body includes two sill side beams and a power battery housing groove between the two sill side beams. A notch of the power battery housing groove is provided with a sealing surface processed mechanically. The sealing surface is arranged around the notch. The vehicle includes the middle section structure of the CTB vehicle lower body described above.

## Description

### TECHNICAL FIELD

The disclosure relates to vehicles, in particular to a middle section structure of a CTB vehicle lower body and a vehicle.

### BACKGROUND

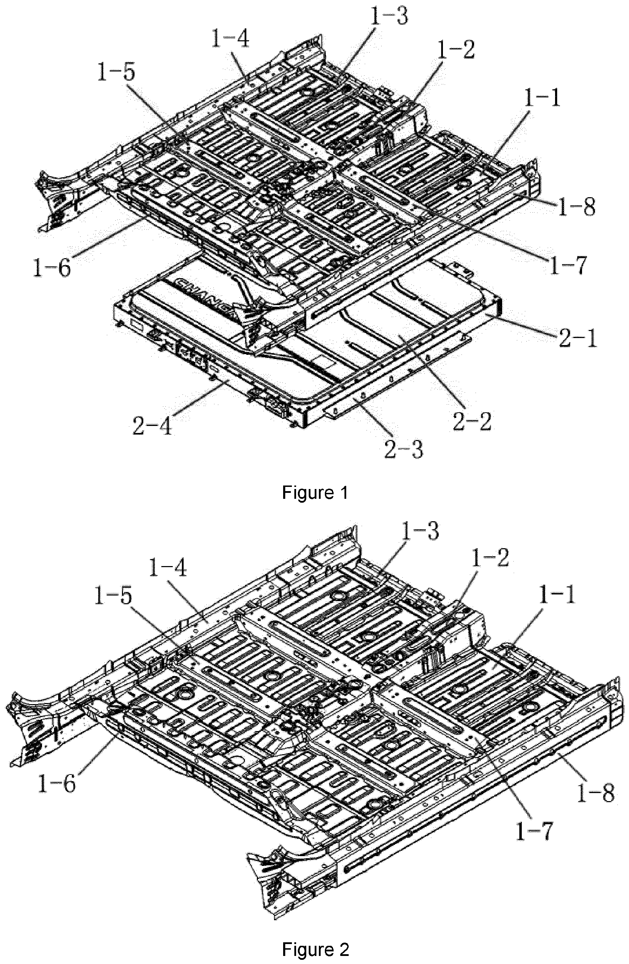

The middle section of the vehicle lower body of the vehicle is the main carrier of the entire vehicle passenger compartment. The middle section of the vehicle lower body of a traditional electric vehicle is assembled by welding more than 50 sheet metal stamping parts and welding more than 60 standard parts, including the front floor welding assembly, the sill inner panel, and the sill outer panel assembly. As shown in FIG. 1 through FIG. 3, a kind of conventional middle section of vehicle lower body of electric vehicle includes a front floor body 1-1, a front floor central control box bracket 1-2, a front floor front beam welding assembly 1-3, a left side sill inner panel 1-4, a front seat rear beam assembly 1-5, a rear floor front beam welding assembly 1-6, a front seat front beam assembly 1-7, a right sill inner panel 1-8, a battery pack body 2-1, a battery pack cover plate 2-2, a battery mounting bracket 2-3 and a battery rear side beam 2-4.

For traditional electric vehicles, the front floor welding assembly is usually welded with the front engine room assembly and the rear floor welding assembly to form the vehicle lower body assembly, and the vehicle lower body assembly and the upper body are welded by resistance spot welding (or a little CO² shielded welding and bolted connection) welded. In order to develop a middle section assembly of the vehicle lower body, experienced professional body designers are required to accurately grasp the structural layout and division of the vehicle lower body. At the same time, full analysis and verification of vehicle performance CAE, collision safety, NVH, and four major processes (stamping, welding, painting, and final assembly) are required. The number of developed parts is large and the cycle is long, which has already caused that it cannot meet the needs of current electric vehicle upgrades and rapid iteration.

Secondly, the traditional mounting method of electric vehicle battery structure is to first assemble the battery cells into the module, and then assemble the module into the battery pack (also called pack). Then, a mounting bracket is designed around the battery pack, and the battery pack is connected with the vehicle lower body along the height direction of the vehicle through bolts. The inventor thinks that it is not necessary to pack one box into another box, and it is better to directly pack the batteries into the whole vehicle. The problem with this traditional structure is that the structure of the module case overlaps with the structure of the battery pack, the upper cover plate of the battery pack overlaps with the structure of the front floor, the structural beams of the front floor and the front beams of the battery pack box are similar in structure and function and overlap with each other, and the frame structure of the battery pack overlaps with the structure of the left and right sill inner panels and sill outer panels of the front floor of the vehicle lower body. These structures have been designed and applied to electric vehicles, which is not beneficial to the lightweight of electric vehicles and the rapid iteration of the development process.

At the same time, at present (the module is assembled into the battery pack, also known as MTP), the traditional battery pack is assembled by about 70 parts and more than 90 standard parts. There are problems such as manufacturing precision, sealing (usually required to reach IP67 level), long development cycle, and even safety, which is not beneficial to the management and control of development progress and quality, is also not beneficial to improve the efficiency of battery pack integration, and is not beneficial to the improvement of the occupant space of the vehicle.

At the same time, the energy consumption of electric vehicles is strongly related to the wind resistance, and the size of the windward area directly affects the wind resistance. The functional structural of the battery pack overlaps with the middle section of the traditional sheet metal vehicle lower body, and there is a problem of low integration. The space in the height direction is not fully utilized, especially for electric vehicles that are keen on pursuing the style of low sports cars, the space requirements in the height direction of the car are even higher. On the other hand, with the development of the intelligence of electric vehicles, there are more and more wiring wires and controllers in the whole vehicle, which limits the space inside the sill for traditional wiring, and the controller has higher requirements for the layout of the whole vehicle.

With the increase of the recharge mileage of electric vehicles, the weight of the whole vehicle is constantly rising, and there are serious challenges in meeting the collision safety, especially for the consideration of the battery safety in the future, and the requirements for side collisions are higher. For example, by 2024, the new regulations require that the impact energy of five-star side pillar impact needs to be increased by 75%, and the speed needs to be increased from 50km/h to 60km/h. For the traditional sheet metal structure, in order to strengthen the structural strength of the side collisions and achieve such performance, it is necessary to continuously increase the structural strength of the front floor sill, the inner and outer panels, and strengthen the support of the seat cross member to the side collision strength, which will cause the middle section of the vehicle lower body to become heavier and heavier.

On the other hand, for the middle section structure of the vehicle lower body, in terms of the performance of the side pillar impact and NTF of the traditional sheet metal structure, due to the characteristics of the sheet metal structure, the thickness of the sheet metal material (generally less than 2.5mm) and the lightweight requirements are limited. To achieve the development goal, CAE analysis and optimization need to be repeated, and even there is still a problem of insufficient performance.

### SUMMARY

The disclosure provides a middle section structure of a CTB vehicle lower body and a vehicle to alleviate or eliminate at least one of the above-mentioned technical problems.

The middle section structure of the CTB vehicle lower body of the disclosure includes a middle section body of the vehicle lower body. the middle section body of the vehicle lower body is integrally cast and formed, the middle section body of the vehicle lower body includes two sill side beams and a power battery housing groove located between the two sill side beams, a notch of the power battery housing groove is provided with a sealing surface processed mechanically, and the sealing surface is arranged around the notch of the power battery housing groove.

In some embodiments, the middle section structure of the CTB vehicle lower body further includes a cover unit fixedly connected with the middle section body of the vehicle lower body, the cover unit closes the notch of the power battery housing groove, the cover unit and the power battery housing groove enclose into a power battery compartment for housing a power battery, and the cover unit and the sealing surface form a seal between them.

In some embodiments, a first sealing component is arranged between the cover unit and the sealing surface, and the first sealing component is used to seal a gap between the cover unit and the sealing surface.

In some embodiments, the sealing surface is arranged facing upwards, and the cover unit supports downwards on the sealing surface.

In some embodiments, the notch of the power battery housing groove is arranged upwards, and a supporting member to support the cover unit is arranged in the power battery housing groove.

In some embodiments, the cover unit includes a cover that closes the notch of the power battery housing groove and a seat cross member fixedly connected with the cover, and the supporting member supports the seat cross member upwards.

In some embodiments, the supporting member is provided with a first supporting surface upwardly supporting the cover and a second supporting surface upwardly supporting the seat cross member.

In some embodiments, a second sealing component is arranged between the first supporting surface and the cover, and the second sealing component is used to seal a gap between the supporting member and the cover.

In some embodiments, a lower end of the supporting member is connected with a bottom wall of the power battery housing groove, and an upper end of the supporting member is connected with the seat cross member through the cover.

In some embodiments, the supporting member is provided with a threaded hole to mount a car seat.

In some embodiments, the middle section body of the vehicle lower body further includes a front beam and a rear beam, the front beam is connected between front ends of the two sill side beams, and the rear beam is connected between rear ends of the sill side beams.

In some embodiments, a front part of the middle section body of the vehicle lower body is provided with a front fastener connecting part to connect with a front part of the vehicle lower body, and a rear part of the middle section body of the vehicle lower body is provided with a rear fastener connecting part to connect with a rear part of the vehicle lower body.

In some embodiments, the middle section body of the vehicle lower body is an aluminum alloy die-casting component that is integrally cast.

In some embodiments, the two sill side beams are provided with a pipeline arrangement passage whose length extends along a front-to-back direction.

The disclosure further provides a vehicle including the middle section structure of the CTB vehicle lower body mentioned above.

The disclosure is beneficial to a platformization of the vehicle lower body, can reduce the number of parts of the vehicle lower body, shorten a development cycle, reduce a development cost. It is also beneficial to a rapid iteration of products and a lightweight of the vehicle lower body. It can improve an efficiency of assembly and ensure a sufficient rigidity and strength of the middle section of the CTB vehicle lower body and the vehicle lower body, which is beneficial to an improvement of a driving comfort of a whole vehicle, and improves a sealing performance of a power battery compartment, a capacity of the power battery compartment and an integration of the middle section structure of the vehicle lower body.

### BRIEF DESCRIPTION OF THE DRAWINGS

FIG. 1 is the schematic structural view of a middle section of an under vehicle body of a conventional electric vehicle described in the background.
FIG. 2 is a schematic structural view of a front floor assembly in the middle section of the vehicle lower body of the conventional electric vehicle described in the background.
FIG. 3 is a schematic structural view of a battery pack assembly in the middle section of the vehicle lower body of the conventional electric vehicle described in the background.
FIG. 4 is a schematic structural view of a middle section body of an vehicle lower body in a specific embodiment of the disclosure.
FIG. 5 is a top view of the middle section body of the vehicle lower body in a specific embodiment.
FIG. 6 is an exploded view of the structure of the middle section of the CTB vehicle lower body in a specific embodiment.
FIG. 7 is a schematic structural view of the middle section structure of the CTB vehicle lower body in a specific embodiment.
FIG. 8 is a schematic structural view of a cover unit in a specific embodiment.
FIG. 9 is a schematic structural view of a seat cross member and a middle longitudinal member in a specific embodiment.
FIG. 10 is a schematic structural view of a cover in a specific embodiment.
FIG. 11 is a cross-sectional view of A-A in FIG. 7.
FIG. 12 is an enlarged view of a part B in FIG. 11.
FIG. 13 is an enlarged view of a part C in FIG. 11.

### PART NUMBER DESCRIPTION

1-middle section body of the vehicle lower body, 2-cover, 3-supporting member, 4-sealing ring, 5-power battery cell, 6-power battery cooling plate, 7-seat cross member, 8-middle longitudinal member, 9-fastener, 10-sealing gasket.
101-left sill side beam, 102-right sill side beam, 103-front beam, 104-rear beam, 105-bottom wall, 106-supporting part, 107-rear fastener connecting part, 108-rear connecting hole, 109-front fastener connecting part, 110-front connecting hole, 111-fastener mounting part, 112-sealing surface, 113-pipeline arrangement passage.
201-via hole, 301-outer flange, 302-threaded hole, 701-seat mounting hole.

### DETAILED DESCRIPTION

The disclosure will be further described below combined with accompanying drawings.

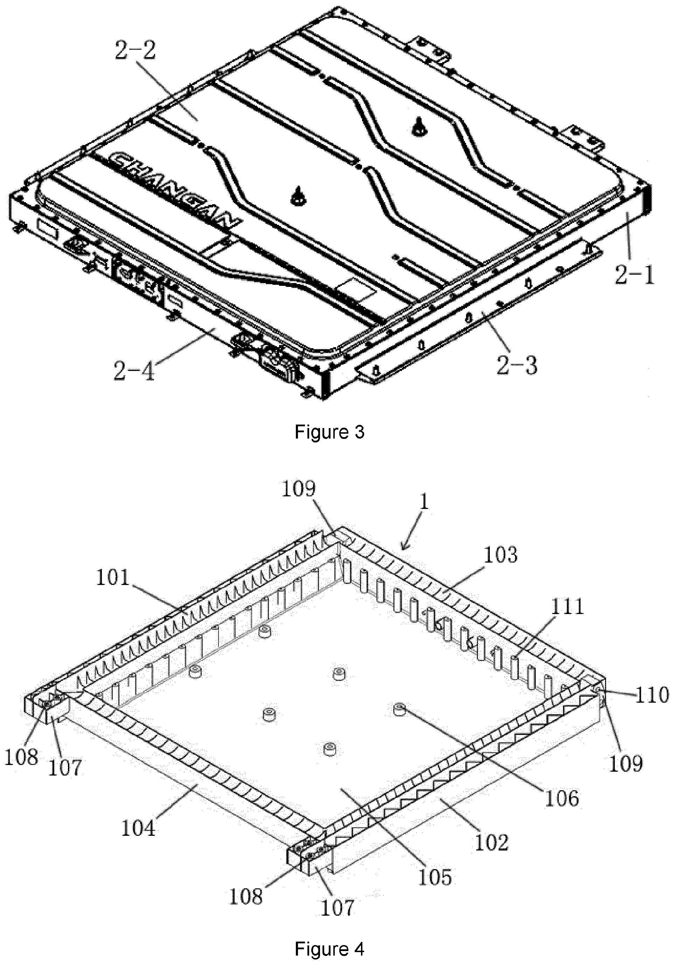

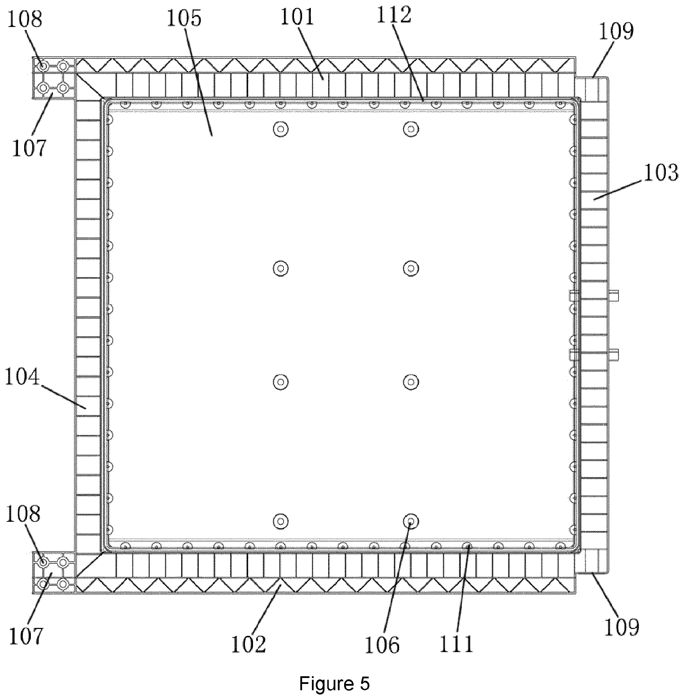

Please refer to FIG. 4 and FIG. 5, which shows a middle section structure of a CTB (Cell to board) vehicle lower body. The middle section structure of the CTB vehicle lower body includes a middle section body of the vehicle lower body 1. The middle section body of the vehicle lower body 1 is integrally cast and formed. The middle section body of the vehicle lower body 1 includes two sill side beams and a power battery housing groove located between the two sill side beams. The power battery housing groove can house multiple sets of power battery cells 5. A notch of the power battery housing groove is provided with a sealing surface 112 processed mechanically, and the sealing surface 112 is arranged around the notch of the power battery housing groove. With the above structure, a one-piece casting structure is beneficial to a platformization of the middle section structure of the CTB vehicle lower body, which can reduce the number of parts of the vehicle lower body, shorten a development cycle, reduce a development cost. It is also beneficial to a rapid iteration of products, improve an efficiency of assembly and ensure a sufficient rigidity and strength of the middle section of the CTB vehicle lower body and the vehicle lower body, which is beneficial to an improvement of a driving comfort of a whole vehicle. Since the middle section body of the vehicle lower body 1 adopts an integral casting structure, the sealing surface 112 may be processed by machining, which is beneficial to form the sealing surface 112 with high precision. For example, the sealing surface 112 with high precision may be milled on the middle section body of the vehicle lower body 1. The sealing surface 112 may be processed by a CNC machine tool, and the sealing surface 112 with high precision can improve an airtightness of a power battery compartment. The middle section body of the vehicle lower body 1 supports a power battery cooling plate 6, the power battery cells 5, copper bars, wires and cooling water pipes, and support a cover unit.

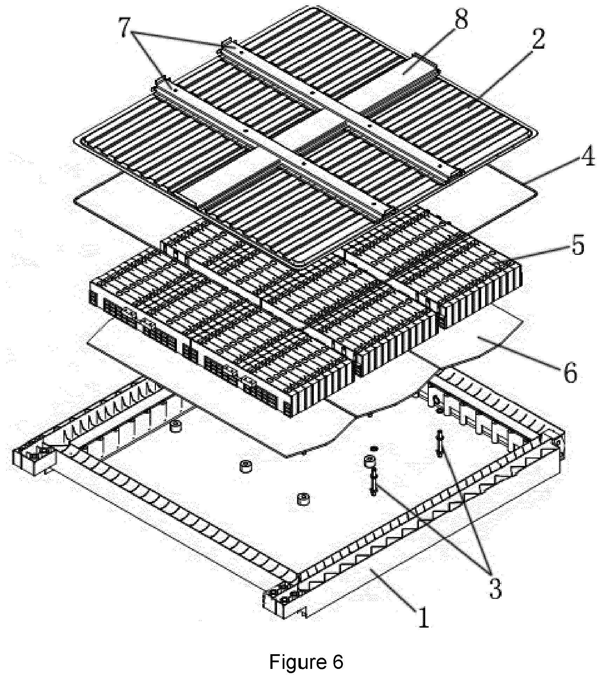

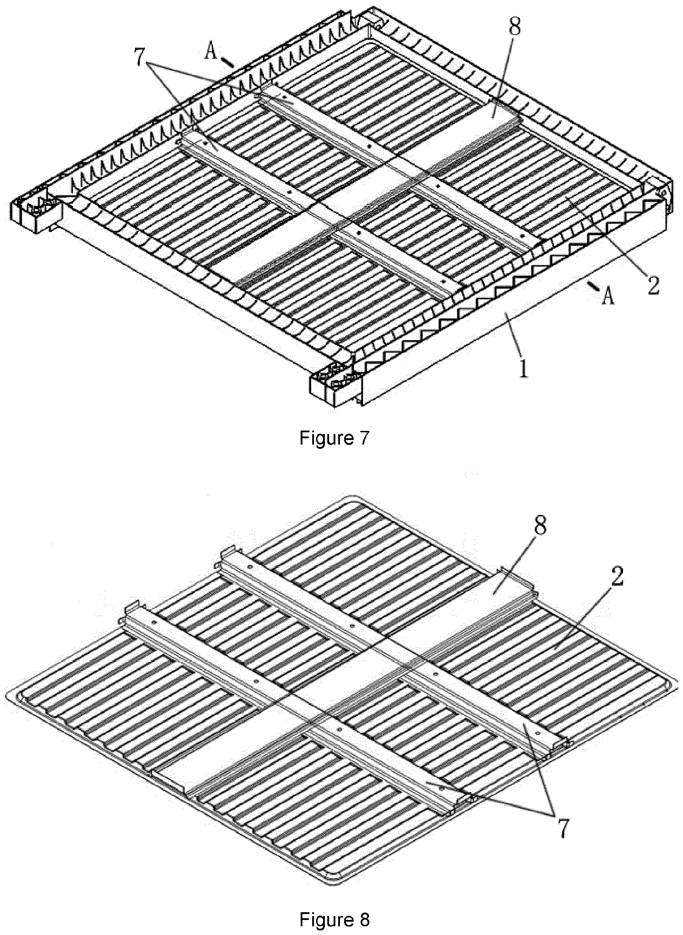

In some embodiments, please refer to FIG. 6 and FIG. 7. The middle section structure of the CTB vehicle lower body further includes the cover unit fixedly connected with the middle section body of the vehicle lower body 1. The cover unit closes the notch of the power battery housing groove, the power battery compartment for housing the power battery is enclosed by the cover unit and the power battery housing groove, and a seal is formed between the cover unit and the sealing surface 112. In the above solution, the cover unit may also be used as a vehicle floor assembly.

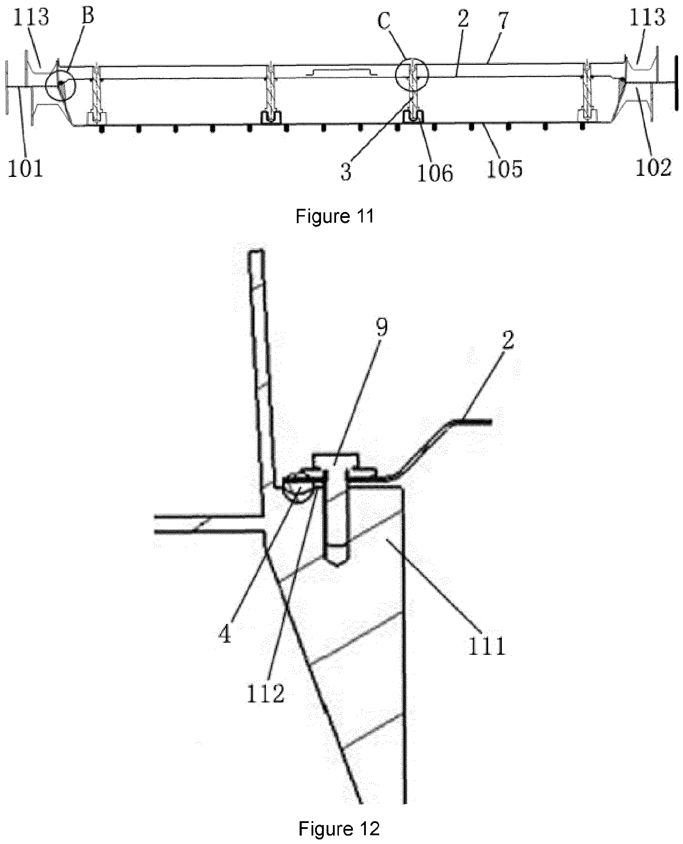

In some embodiments, please refer to FIG. 11 and FIG. 12. In order to ensure the airtightness of the power battery compartment, a first sealing component is arranged between the cover unit and the sealing surface 112. The first sealing component is used to seal a gap between the cover unit and the sealing surface 112. The first sealing component may be selected from but not limited to a sealing ring 4 or sealant. Further, in order to mount the sealing ring 4 conveniently, a sealing ring mounting groove matched with the sealing ring 4 is formed on the sealing surface 112 by machining.

In some embodiments, please refer to FIG. 11 and FIG. 12. The sealing surface 112 is arranged upward, and the cover unit is supported downward on the sealing surface 112. Specifically, the notch of the power battery housing groove is arranged upwards, and the middle section body of the vehicle lower body 1 is provided with an annular supporting surface facing upwardly. The annular supporting surface is arranged around the notch of the power battery housing groove, and the sealing surface 112 is arranged on the annular supporting surface. Utilizing the sealing surface 112 to support the cover unit can strengthen a support for the cover unit, and is also beneficial to improving an airtightness between the cover unit and the sealing surface 112.

In some embodiments, the notch of the power battery housing groove is arranged upward, and the supporting member 3 for supporting the cover unit upward is arranged in the power battery housing groove. Through arranging the supporting member 3, the support for the cover unit can be strengthened, a stability of the power battery compartment can be improved, and the airtightness of the power battery compartment may also be ensured.

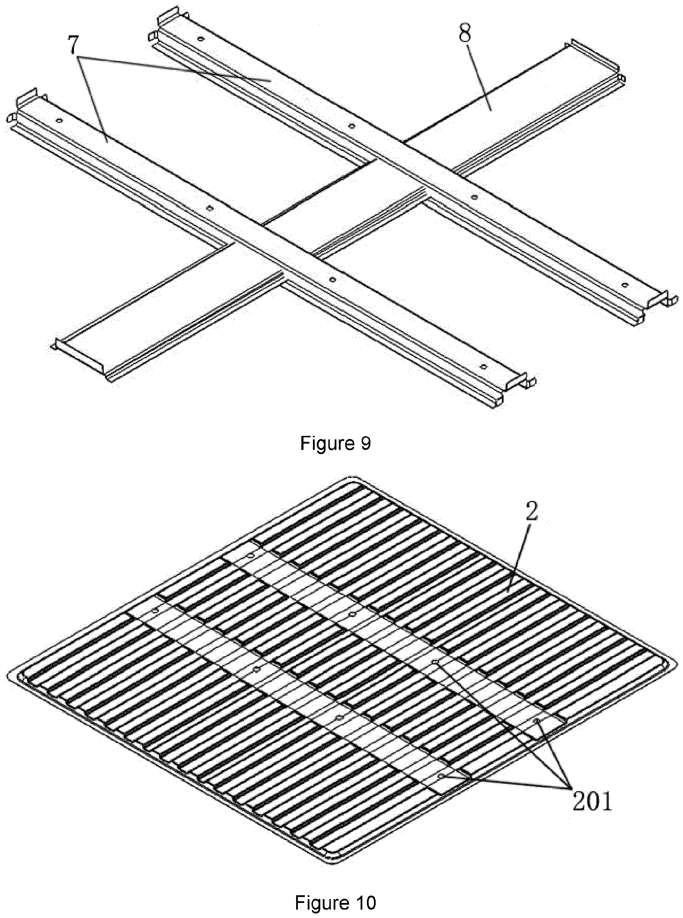

In some embodiments, please refer to FIG. 8 and FIG. 10. The cover unit includes a cover 2 that closes the notch of the power battery housing groove and a seat cross member 7 fixedly connected with the cover 2 , and the supporting member 3 supports the seat cross member 7 upwards. With this solution, a strength and rigidity of the seat cross member 7 can be improved. The cover 2 is used to close the power battery compartment, and the cover 2 is also used as a floor of a passenger compartment, which improves an integration level, reduces a restriction on a height of the vehicle, facilitates a space layout of the passenger compartment, and is beneficial to improve a distance from a ground of the vehicle and enhances a flexibility of seat arrangement.

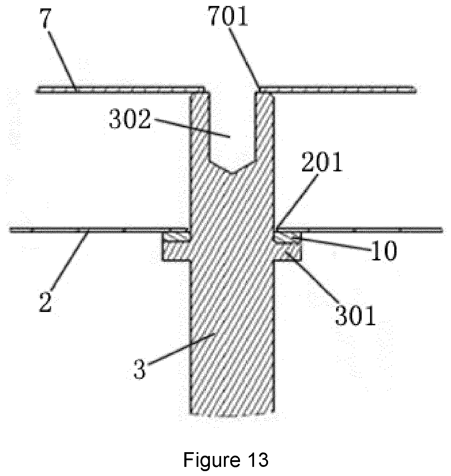

In some embodiments, please refer to FIG. 11 and FIG. 13. The supporting member 3 is provided with a first support surface for upwardly supporting the cover plate 2 and a second support surface for upwardly supporting the seat beam 7. Through arranging the supporting member 3 to strengthen the support for the cover 2 and the seat cross member 7, requirements for the cover 2 and the seat cross member 7 can be reduced, which is beneficial to realize a lightweight of the cover unit. The cover unit may be realized by using a conventional sheet metal welding assembly structure, which may reduce a development of a pair of aluminum alloy die-casting parts.

In some embodiments, please refer to FIG. 11 and FIG. 13. A second sealing component is arranged between the first supporting surface and the cover 2 , and the second sealing component is used to seal a gap between the supporting member 3 and the cover 2. The second sealing component may be selected from but not limited to sealing gasket 10 or sealant. The flexible second sealing component can ensure the airtightness of the power battery compartment, which is beneficial to a realization of a sealing performance and safety performance of a battery system, and can also play a buffering role on the cover 2 and improve an NVH performance.

In some embodiments, please refer to FIG. 11 and FIG. 13. In order to strengthen a supporting effect on the seat cross member 7 , a lower end of the supporting member 3 is connected with a bottom wall 105 of the power battery housing groove, and an upper end of the supporting member 3 passes through the cover 2 and is connected with the seat cross member 7.

In some embodiments, please refer to FIG. 11 and FIG. 13. The supporting member 3 is provided with a threaded hole 302 for mounting a car seat. Utilizing the supporting member 3 as a mounting point of the car seat can strengthen a support of the car seat, reduce requirements on the cover 2 and the seat cross member 7, and is beneficial to realize the lightweight of the cover unit. At the same time, a connection structure between the supporting member 3 and the car seat can also be used to realize a connection between the supporting member 3 and the seat cross member 7, for example, the supporting member 3, the seat beam 7 and the car seat are fixedly connected together by seat mounting bolts.

In some embodiments, please refer to FIG. 4, FIG. 5, FIG. 6, FIG. 10, FIG. 11 and FIG. 13. A supporting part 106 protruding upwards is arranged on the bottom wall 105 of the power battery housing groove. The supporting member 3 is a rod-shaped component, and a screw section screwed to the supporting part 106 is arranged at the lower end of the supporting member 3. An outer flange 301 is arranged on an upper part of the supporting member 3, an upper surface of the outer flange 301 is the first supporting surface, and an upper end surface of the supporting member 3 is a second supporting surface. The threaded hole 302 is a counterbore extending downward from the upper end surface of the supporting member 3, the cover 2 is provided with a via hole 201 for the upper end of the supporting member 3 to pass through, and seat mounting holes 701 corresponding to the threaded holes 302 are arranged on the seat cross member 7. With the above solution, during assembly, the supporting member 3 may be fixedly mounted on the supporting part 106 first, then the sealing gasket 10 may be arranged on the supporting member 3, then the cover unit may be mounted, and then the car seat may be mounted, which has an advantage of high assembly efficiency. During a specific embodiment, the seat cross member 7 is a U-shaped cross member welded on the cover 2. In a specific embodiment, a plurality of supporting members 3 may be arranged corresponding to each seat cross member 7, for example four supporting members 3. A plurality of seat cross members 7 may be welded on the cover 2. The supporting member 3 may be set as a special connecting bolt, and its material may be aluminum alloy or steel, and its function is to ensure a structural rigidity and strength of the mounting point of the car seat, which improves an overall structural rigidity of the vehicle lower body, and the NVH performance of the vehicle body and meets corresponding regulations and a realization of various crash safety star levels.

In some embodiments, please refer to FIG. 4, FIG. 5, FIG. 11 and FIG. 12. A plurality of fastener mounting parts 111 are arranged on the sealing surface 112. The cover unit is fixedly connected with the middle section body of the vehicle lower body 1 through the fastener 9 connected with the fastener mounting part 111, and the fastener 9 may be selected from bolts. Correspondingly, a plurality of fastener mounting parts 111 may be arranged as bolt connection columns. When the cover unit is fastened to the middle section body of the vehicle lower body 1 through the fastener 9, a plurality of supporting members 3 support the cover 2, and the sealing ring 4 or sealant is arranged between the cover unit and the sealing surface 112, the sealing surface 112 processed by the above-mentioned machining method can ensure that the power battery compartment has airtightness of IP67 and above.

In some embodiments, please refer to FIG. 6 through FIG. 9. The cover unit further includes a middle longitudinal member 8 fixedly connected with the cover. The middle longitudinal member 8 can support the control unit of the whole vehicle, such as supporting for the safety controller. The middle longitudinal member 8 can also increase a rigidity and strength of the cover unit.

In some embodiments, please refer to FIG. 4 and FIG. 5. The middle section body of the vehicle lower body 1 further includes a front beam 103 and a rear beam 104. The front beam 103 is connected between front ends of the two sill side beams, the rear beam 104 is connected between rear ends of the two sill side beams, and the two sill side beams are respectively a left sill side beam 101 and a right sill side beam 102. The left sill side beam 101, the right sill side beam 102, the front beam 103 and the rear beam 104 are connected into a frame structure, which can improve the rigidity and strength of the middle section body of the vehicle lower body 1 and can also strengthen a protection of the power battery compartment. During a specific embodiment, the middle section body of the vehicle lower body 1 further includes the bottom wall 105. The bottom wall 105, the left sill side beam 101, the right sill side beam 102, the front cross beam 103 and the rear cross beam 104 enclose into the power battery housing groove.

In some embodiments, please refer to FIG. 4 and FIG. 5. A front part of the middle section body of the vehicle lower body 1 is provided with a front fastener connecting part 109 for connecting with a front section of the vehicle lower body. The front fastener connecting part 109 is provided with a front connecting hole 110, a rear part of the middle section body of the vehicle lower body 1 is provided with a rear fastener connecting part 107 for connecting with a rear section of the vehicle lower body, and a rear connecting hole 108 is arranged on the rear fastener connecting part 107. Through arranging the front fastener connecting part 109 and the rear fastener connecting part 107, a fast adjustment of a mounting hard point of a chassis can be realized, which is beneficial to realize the platformization of the vehicle lower body. Specifically, the front fastener connecting part 109 is arranged at the front end of the two sill side beams, and the rear fastener connecting part 107 is arranged at the rear ends of the two sill side beams. Through arranging the front fastener connecting part 109 and the rear fastener connecting part 107, the two sill side beams can be better connected with the front section of the vehicle lower body and the rear section of the vehicle lower body, and a collision force can be better transmitted between the sill side beam and the front section of the vehicle lower body and between the sill side beam and the rear section of the vehicle lower body.

In some embodiments, the front connecting hole 110 and the rear connecting hole 108 are machined holes. On one hand, the front connecting hole 110 and the rear connecting hole 108 have higher precision. On the other hand, in order to adapt to a wheelbase variation of different models of vehicles on platform, it is very convenient to change a hole spacing of the front connecting holes 110 in a vehicle width direction and/or change a hole spacing of the rear connecting holes 108 in the vehicle width direction to accommodate changes in wheelbase. In some embodiments, both the front connecting hole 110 and the rear connecting hole 108 are processed by the CNC machine tool.

In some embodiments, the middle section body of the vehicle lower body 1 is an aluminum alloy die-casting part that is integrally cast. A use of the aluminum alloy die-casting part is beneficial to the lightweight of the middle section body of the vehicle lower body 1, and can reduce a weight by more than 12% compared with a conventional solution with sheet metal. At the same time, the use of aluminum alloy die-casting part can further ensure the sufficient rigidity and strength of the middle section body of the vehicle lower body 1. A thickness of the aluminum alloy die-casting part is between 2.5mm to 6.0mm, which can ensure the side pillar impact and the NTF performance of the middle section body of the vehicle lower body 1. Further, the middle section body of the vehicle lower body 1 is made by a high vacuum die-casting process. In other embodiments, the middle section body of the vehicle lower body 1 may also use other lightweight alloy materials, such as magnesium alloy.

In some embodiments, please refer to FIG. 4, FIG. 5 and FIG. 11. The two sill side beams are provided with a pipeline arrangement passage 113 whose length extends along a front-to-back direction. Since the middle section body of the vehicle lower body 1 is made of the aluminum alloy die-casting part, it is convenient to arrange the pipeline arrangement passage 113 on the sill side beam, which can reduce a restriction on an arrangement of vehicle pipelines.

In some embodiments, the bottom wall 105 of the power battery housing groove is provided with a cooling plate bonding part, and front and rear ends of the power battery housing groove are respectively designed with an inlet and outlet pipeline mounting structure of cooling liquid and a high-voltage wire mounting structure. In actual assembly, the power battery cooling plate 6 is directly mounted in the power battery housing groove of the middle section body of the vehicle lower body 1, then the power battery cell 5 is directly mounted on the power battery cooling plate 6, and other cooling water pipes are arranged in the power battery housing groove.

The disclosure further provides a vehicle which includes any of the middle section structure of the CTB vehicle lower body mentioned above.

A traditional design of a middle section of the vehicle lower body is mainly based on sheet metal stamping and welding parts. The middle section structure of the CTB vehicle lower body of the disclosure mainly adopts high-vacuum die-casting parts, and integrates the front floor, the sill side beams and the battery pack into a middle section structure of the CTB vehicle lower body. The middle section structure of the CTB vehicle lower body has a better weight reduction effect through a structural integration, and can optimize a cost of an entire value chain in a design and manufacturing process. The middle section structure of the CTB vehicle lower body is more than 12% lighter than a traditional sheet metal solution. When developing vehicles on the same platform, local adjustments may be made to adapt to a platform development of different models, which shortens the development cycle and development costs and is beneficial to the rapid iteration of a vehicle development.

Due to the integration, the number of parts in the middle section structure of the CTB vehicle lower body is reduced, and an effect of the lightweight of the middle section structure of the CTB vehicle lower body is improved. Multiple car models may be developed on the same platform to easily adapt to changes in vehicle length and width. Due to characteristics and process attributes of aluminum alloy die-casting parts, it is beneficial to an improvement of a torsional rigidity of the middle section structure of the CTB vehicle lower body and an entire vehicle body, thereby improving a driving control performance and driving comfort of the vehicle.

A battery pack upper cover and a front floor assembly are integrated through the cover unit, which facilitates a space layout of the passenger compartment, is beneficial to improve a distance from a ground of the vehicle and enhances a flexibility of seat arrangement.

The vehicle lower body and a battery pack frame are integrated through the middle section body of the vehicle lower body 1 and matched together with the cover 2 that doubles as the floor and the upper cover of the battery pack. Compared with the traditional steel body structure, a battery capacity can be increased by more than 78%.

The middle section body of the vehicle lower body 1 is made of a high-vacuum die-casting part, and the cover 2 is a stamped and welded sheet metal structure, which is beneficial to ensure a balance of advantages in equipment, process and process manufacturing cost.

Due to the high-vacuum die-casting part used in the middle section body of the vehicle lower body 1, the torsional rigidity of the whole vehicle can be greatly increased by more than 80%, and at the same time, it is beneficial to improve the safety performance of a side collision of the whole vehicle.

In the description of this specification, a description with reference to the terms "an embodiment", "some embodiments", "a specific embodiment ", "an example", "some examples", etc. means that a specific feature, structure, material or characteristic described in connection with this embodiment or example is included in at least one embodiment or example of the disclosure. In this specification, schematic representations of the above terms do not necessarily refer to the same embodiment or example. Furthermore, the particular features, structures, materials or characteristics described may be combined in any suitable manner in any one or more embodiments or examples. In addition, those skilled in the art may combine different embodiments or examples described in this specification.

## Claims

1. A middle section structure of a CTB vehicle lower body, comprising a middle section body of the vehicle lower body, wherein
the middle section body of the vehicle lower body is integrally cast and formed, the middle section body of the vehicle lower body comprises two sill side beams and a power battery housing groove located between the two sill side beams, a notch of the power battery housing groove is provided with a sealing surface processed mechanically, and the sealing surface is arranged around the notch of the power battery housing groove.

2. The middle section structure of the CTB vehicle lower body according to claim 1, further comprising a cover unit fixedly connected with the middle section body of the vehicle lower body, wherein
the cover unit closes the notch of the power battery housing groove, the cover unit and the power battery housing groove enclose into a power battery compartment for housing a power battery, and the cover unit and the sealing surface form a seal therebetween.

3. The middle section structure of the CTB vehicle lower body according to claim 2, wherein
a first sealing component is arranged between the cover unit and the sealing surface, and the first sealing component is used to seal a gap between the cover unit and the sealing surface.

4. The middle section structure of the CTB vehicle lower body according to claim 2 or 3, wherein
the sealing surface is arranged facing upwards, and the cover unit supports downwards on the sealing surface.

5. The middle section structure of the CTB vehicle lower body according to any of claims 2 to 4, wherein
the notch of the power battery housing groove is arranged upwards, and a supporting member to support the cover unit is arranged in the power battery housing groove.

6. The middle section structure of the CTB vehicle lower body according to claim 5, wherein
the cover unit comprises a cover that closes the notch of the power battery housing groove and a seat cross member fixedly connected with the cover, and the supporting member supports the seat cross member upwards.

7. The middle section structure of the CTB vehicle lower body according to claim 6, wherein
the supporting member is provided with a first supporting surface upwardly supporting the cover and a second supporting surface upwardly supporting the seat cross member.

8. The middle section structure of the CTB vehicle lower body according to claim 6 or 7, wherein
a second sealing component is arranged between the first supporting surface and the cover, and the second sealing component is used to seal a gap between the supporting member and the cover.

9. The middle section structure of the CTB vehicle lower body according to any of claims 6 to 8, wherein
a lower end of the supporting member is connected with a bottom wall of the power battery housing groove, and an upper end of the supporting member is connected with the seat cross member through the cover.

10. The middle section structure of the CTB vehicle lower body according to any of claims 5 to 9, wherein
the supporting member is provided with a threaded hole to mount a car seat.

11. The middle section structure of the CTB vehicle lower body according to any of claims 1 to10, wherein
the middle section body of the vehicle lower body further comprises a front beam and a rear beam, the front beam is connected between front ends of the two sill side beams, and the rear beam is connected between rear ends of the sill side beams.

12. The middle section structure of the CTB vehicle lower body according to any of claims 1 to 11, wherein
a front part of the middle section body of the vehicle lower body is provided with a front fastener connecting part to connect with a front part of the vehicle lower body, and a rear part of the middle section body of the vehicle lower body is provided with a rear fastener connecting part to connect with a rear part of the vehicle lower body.

13. The middle section structure of the CTB vehicle lower body according to any of claims 1 to 12, wherein
the middle section body of the vehicle lower body is an aluminum alloy die-casting component that is integrally cast.

14. The middle section structure of the CTB vehicle lower body according to any of claims 1 to 13, wherein
the two sill side beams are provided with a pipeline arrangement passage whose length extends along a front-to-back direction.

15. A vehicle, comprising the middle section structure of the CTB vehicle lower body according to any of claim 1 to claim 14.
